(19) Europäisches Patentamt
European Patent Office
Office européen des brevets

(11) **EP 4 432 745 A1**

(12) **EUROPEAN PATENT APPLICATION**
published in accordance with Art. 153(4) EPC

(43) Date of publication:
**18.09.2024 Bulletin 2024/38**

(21) Application number: **22893261.2**

(22) Date of filing: **11.11.2022**

(51) International Patent Classification (IPC):
*H04W 72/00* (2023.01)     *H04W 72/04* (2023.01)
*H04W 72/12* (2023.01)     *H04W 76/27* (2018.01)

(52) Cooperative Patent Classification (CPC):
H04W 72/00; H04W 72/04; H04W 72/12;
H04W 76/27

(86) International application number:
**PCT/KR2022/017727**

(87) International publication number:
**WO 2023/085842 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2021 KR 20210154914**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING COMMUNICATION IN WIRELESS COMMUNICATION SYSTEM**

(57)     A method and a device for performing communication in a wireless communication system are disclosed. A method for performing communication by a terminal according to an embodiment of the present disclosure comprises the steps of: receiving, from a base station, configuration information related to at least one secondary cell (SCell); receiving, from the base station, first information for activating a specific SCell among the at least one SCell; and starting or restarting an SCell deactivation timer associated with the specific SCell on the basis of reception of first data from the base station on the specific SCell. The first data may include at least one of multicast data and u11icast data, but may not include broadcast data.

FIG.8

RECEIVING CONFIGURATION INFORMATION RELATED TO AT LEAST ONE SCELL FROM THE BASE STATION — S810

RECEIVING FIRST INFORMATION FOR ACTIVATING A SPECIFIC SCELL AMONG AT LEAST ONE SCELL FROM THE BASE STATION — S820

BASED ON THE FIRST DATA BEING RECEIVED FROM THE BASE STATION ON A SPECIFIC SCELL, STARTING OR RESTARTING THE SCELL DEACTIVATION TIMER ASSOCIATED WITH THE SPECIFIC SCELL — S830

**Description**

[TECHNICAL FIELD]

The present disclosure relates to wireless communication systems, and more particularly to methods and devices for performing communication in wireless communication systems.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing communication in a wireless communication system.

Additionally, an additional technical problem of the present disclosure is to provide a method and apparatus for starting or restarting a timer related to deactivation of a secondary cell according to transmission and reception of multicast data or unicast data.

The technical problems to be achieved by the present disclosure are not limited to the above-described technical objects, and other technical problems which are not described herein will be clearly understood by those skilled in the pertinent art from the following description.

[Technical Solution]

In an embodiment of the present disclosure, a method for a terminal to perform communication in a wireless communication system may include receiving, from a base station, configuration information related to at least one secondary cell (SCell); receiving, from the base station, first information for activating a specific SCell among the at least one SCell; and based on first data being received from the base station on the specific SCell, starting or restarting an SCell deactivation timer associated with the specific SCell, and the first data may include at least one of multicast data or unicast data and does not include broadcast data.

In another embodiment of the present disclosure, a method of performing communication by a base station in a wireless communication system may include transmitting, to a user equipment (UE), configuration information related to at least one secondary cell (SCell); and transmitting, to the UE, first information for activating a specific SCell among the at least one SCell; and based on first data being transmitted to the UE on the specific SCell, a SCell deactivation timer associated with the specific SCell may be started or restarted, and the first data includes at least one of multicast data or unicast data and does not include broadcast data.

[Technical Effects]

According to an embodiment of the present disclosure, a method and device for performing communication in a wireless communication system may be provided.

In addition, according to an embodiment of the present disclosure, a method and device for starting or restarting a timer related to deactivation of a secondary cell according to transmission and reception of multicast data or unicast data may be provided.

In addition, according to an embodiment of the present disclosure, by controlling the reception of a specific type of data so that it does not affect the restart of the timer associated with the deactivation of the secondary cell, the UE can be prevented from unnecessarily keeping the secondary cell activated.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method of transmitting and receiving HARQ-ACK for a group common PDSCH in a wireless communication system to which the present disclosure may be applied.

FIG. 8 is a diagram for describing a communication performance operation of a terminal in a wireless communication system to which the present disclosure may be applied.

FIG. 9 is a diagram for describing the communication performance operation of a base station in a wireless communication system to which the present disclosure may be applied.

FIG. 10 is a diagram illustrating signaling procedures of the network side and the terminal according to an embodiment of the present disclosure.

FIG. 11 illustrates a block diagram of a wireless communication device according to an embodiment of the present disclosure.

[DETAILED DESCRIPTION]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, ">ooc" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality

- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

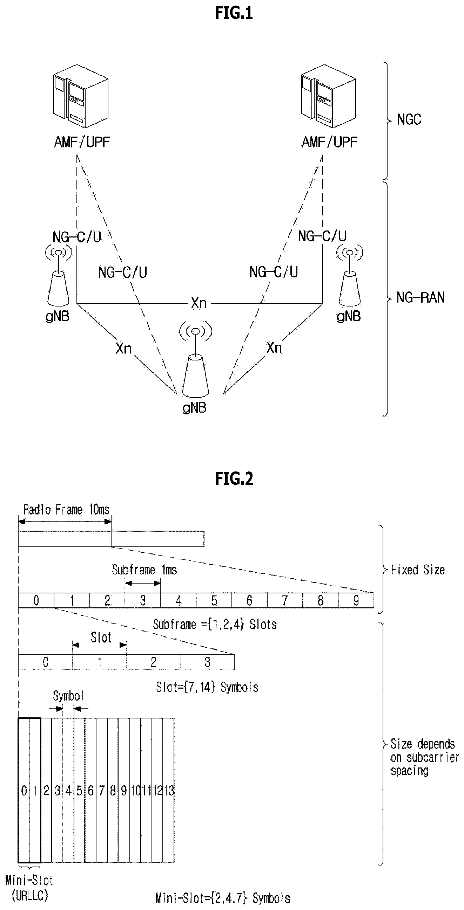

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot Nf)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively.

In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

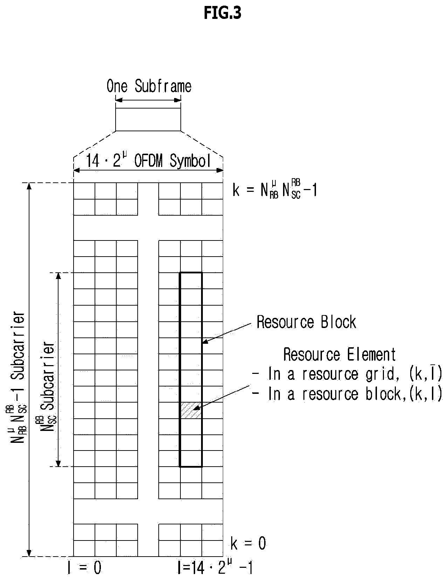

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{N}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain. Point A plays a role as a common reference point of a resource block grid and is obtained as follows.

-    offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

-    absoluteFrequencyPointA represents a frequency-position of point A expressed as in ARFCN (absolute radio-frequency channel number). Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB}=n^{\mu}_{PRB}+N^{start,\mu}_{BWP,i}$$

$N_{BWP,i}^{start,\mu}$ is a common resource block that a BWP starts relatively to common resource block 0.

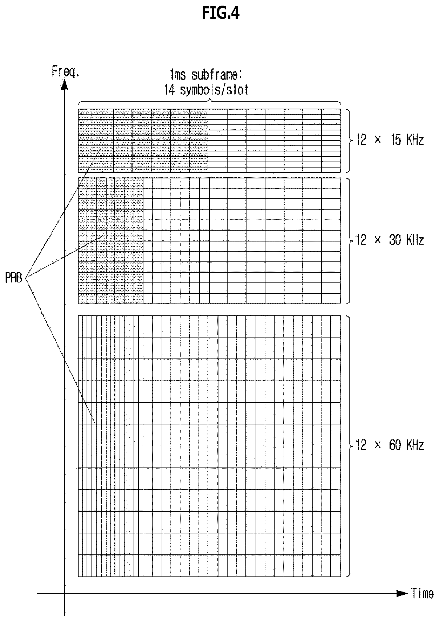

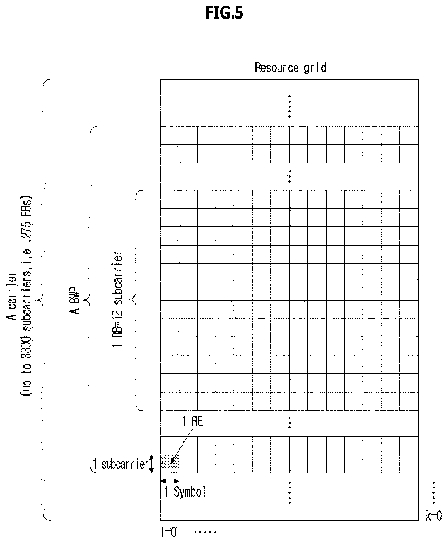

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

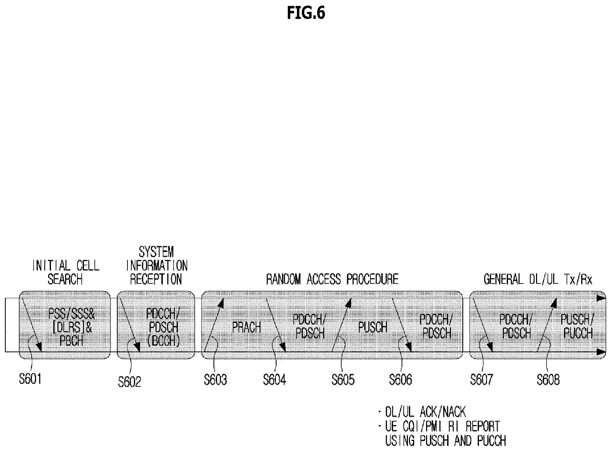

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS(multimedia broadcast/multicast service) Scheme

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

Here, SFN scheme may be used to provide a broadcast service to a wide area (e.g., MBMS area) through resources allocated semi-statically in advance, and SC-PTM scheme may be mainly used to provide a broadcast service only within a cell coverage through dynamic resources.

SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting SC-MCCH or SC-MTCH data may be scheduled through a PDCCH indicated by a Group Radio Network Temporary Identifier (G-RNTI).

In this case, a temporary mobile group identify (TMGI) corresponding to the service ID may be mapped one-to-one with a specific G(group)-RNTI value. Accordingly, when the base station provides a plurality of services, a plurality of G-RNTI values may be allocated for SC-PTM transmission. One or a plurality of terminals may perform PDCCH monitoring by using a specific G-RNTI to receive a specific service.

And, for a specific service/specific G-RNTI, SC-PTM dedicated DRX on-duration period may be configured, and in this case, the UEs may wake up only for a specific on-duration period and perform PDCCH monitoring for the G-RNTI.

MBS (multicast broadcast service) based transmission / reception operation

In a basic wireless communication system, the base station sets UE-specific SPS(semi-persistent scheduling) configuration information to a specific terminal, so that a downlink (DL) SPS transmission resource that is repeated according to a configured period may be allocated to a specific terminal. In this case, the DCI transmitted through the UE-dedicated PDCCH indicates activation of a specific SPS configuration index (SPS activation), thereby indicating the corresponding terminal to repeatedly receive the SPS transmission resource according to a configured period.

This initial SPS transmission resource may be used for initial HARQ transmission, and the base station may allocate a retransmission resource of a specific SPS configuration index through DCI transmitted through a UE-dedicated PDCCH. For example, when the terminal reports a HARQ negative acknowledgment (NACK) for the SPS transmission resource, the base station may allocate the retransmission resource to DCI so that the terminal may receive the DL retransmission.

And, the DCI transmitted through the UE-dedicated PDCCH may indicate deactivation (SPS release or SPS deactivation) of a specific SPS configuration index, and in this case, the corresponding UE may not receive the indicated SPS transmission resource. Here, the CRC of the DCI for the activation/retransmission/deactivation may be scrambled with a CS-RNTI (Configured Scheduling RNTI).

In a wireless communication system (e.g., NR), a DL broadcast or DL multicast transmission scheme for supporting an MBS similar to the above-described MBMS may be applied. The base station may provide a point-to-multipoint (PTM) transmission scheme and a point-to-point (PTP) transmission scheme for DL broadcast or DL multicast transmission.

In the PTM transmission scheme for MBS, the base station may transmit a group common PDCCH and a group common PDSCH to a plurality of terminals, and a plurality of UEs may simultaneously receive the same group common PDCCH and group common PDSCH transmission and decode the same MBS data.

In addition, in the PTP transmission scheme for MBS, the base station may transmit the UE-dedicated PDCCH and the UE-dedicated PDSCH to a specific UE, and only the corresponding UE may receive the UE-dedicated PDCCH and the UE-dedicated PDSCH. Here, when there are a plurality of UEs receiving the same MBS service, the base station may separately transmit the same MBS data to individual UEs through different UE-dedicated PDCCHs and UE-dedicated PDSCHs.

In a basic wireless communication system, the UE may switch BWP based on a timer. Here, since the timer is (re)started considering only unicast transmission, when the UE receives PTP retransmission or broadcast data, a problem may arise in that the actual terminal does not know exactly when to (re)start the timer.

Transmission and reception operation based on CFR (common frequency resource) configured for the UE

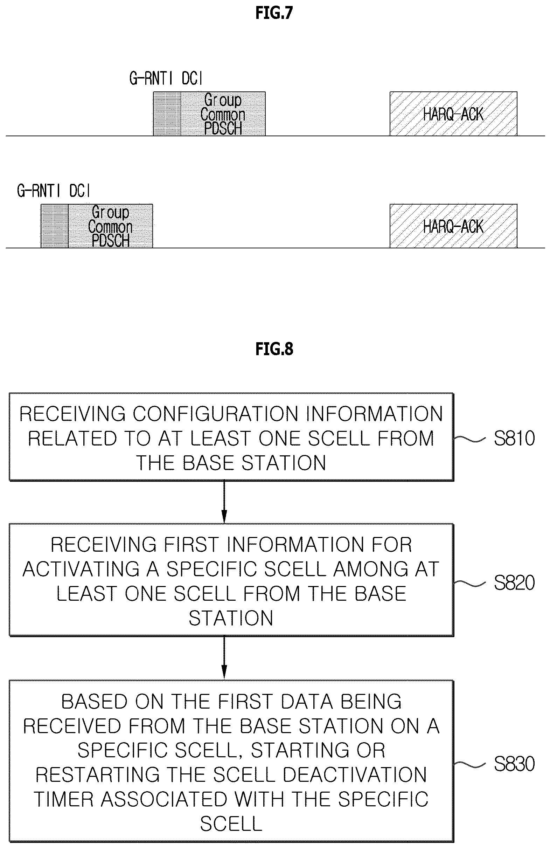

As shown in FIG. 7, the UE may receive group common PDCCH/PDSCHs scheduled for different G-RNTIs through FDM or TDM. The base station may configure CFR, a frequency range similar to BWP, and the UE may receive group common PDCCH/PDSCH through CFR.

A UE in connected mode may receive unicast PDCCH/PDSCH by activating one DL BWP, and may receive group common PDCCH/PDSCH through CFR connected to the activated DL BWP. Here, the UE may transmit a multicast HARQ-ACK transmission for the group common PDCCH/PDSCH to the base station. A UE in idle or inactive mode may receive the group common PDCCH through the CFR connected to the first DL BWP.

A UE in idle or inactive mode may receive a group common PDCCH/PDSCH for broadcast through the first BWP or a CFR including the first BWP. If CFR is configured to a bandwidth wider than the initial BWP, the UE may receive a bandwidth equal to the CFR only during the time period when the service of interest is transmitted, and may only receive the bandwidth of the initial BWP during the time period when the service of interest is not transmitted. Here, the bandwidth of the first BWP may correspond to the bandwidth of CORESET 0 configured by MIB or the bandwidth of the first BWP configured by SIB 1.

Additionally or alternatively, when a UE receiving broadcast data in idle or inactive mode switches to connected mode through the RRC setup or RRC resume process, the UE may perform RACH for initial access. Here, an RRC request or RRC resumption request message may be transmitted through MSG 3 of the 4-step RACH process or MSGA of the 2-step RACH process. Here, the UE may inform the base station whether the UE has received broadcast data according to a method described later using MSG3 in the 4-step RACH process or MSGA in the 2-step RACH process.

Method 1: The UE may inform the base station whether broadcast data is received through the establishment case field of the RRC request or RRC resume request message.

For example, whether the UE is receiving broadcast data may be indicated through a specific reserved value in the establishment case field. Additionally, a specific reserved value in the establishment case field may indicate whether broadcast data is being received on a certain BWP, CFR, or frequency.

Method 2: Whether or not broadcast data is received may be indicated by the LCID (logical channel ID) field of the MAC PDU header including the RRC request or RRC resume request message.

As an example, the header of the MAC PDU included in the RRC setup request or RRC resume request message (e.g., a specific value of the LCID field of the header) may indicate whether broadcast data is received.

A specific value in the LCID field of the header may indicate which BWP, which CFR, or which frequency the broadcast is being received on. Alternatively, a specific value in the LCID field of the header may indicate which G-RNTI is being received. Here, the MAC PDU may correspond to MSG3 in the 4-step RACH process or MSGA in the 2-step RACH process.

Additionally or alternatively, MSG3 in the 4-step RACH process or MSGA in the 2-step RACH process may include MAC CE. Additionally, a specific field of the MAC CE may indicate whether broadcast is being received, which BWP, CFR, or frequency broadcast data is being received from, or which G-RNTI is being received.

Method 3: Whether or not broadcast data is received may be indicated through the RACH preamble ID, RACH occasion, or UL BWP of 4-step RACH or 2-step RACH.

When performing RACH for initial access, whether or not broadcast data is received may be indicated by the RACH preamble ID, RACH occasion, or UL BWP used in transmitting the preamble part of MSG1 of 4-step RACH or MSGA of 2-step RACH. Alternatively, the above-described data may indicate at which BWP, CFR, or frequency broadcast data is being received, or which G-RNTI is being received, etc.

When the UE reports whether broadcast data has been received through RACH in the above-described manner, the base station may transmit an RRC setup message or an RRC resume message to the UE.

Here, the RRC setup message or RRC resume message may include broadcast CFR setup information. In addition, the RRC setup message or RRC resume message may also include configuration information about the first/default BWP supporting the configured broadcast CFR or the first active DL BWP supporting the broadcast CFR. After receiving the RRC setup message or RRC resume message, the UE switches to connected mode and may configure the first/basic BWP or first active DL BWP related to the broadcast CFR according to the configuration information.

Here, the first BWP related to the broadcast CFR includes the broadcast CFR, may be different from the first BWP configured by MIB or SIB, and may be the first BWP with a wider bandwidth than the first BWP configured by MIB or SIB.

Assume that the RRC setup message or RRC resume message does not include the setup information. The UE that receives broadcast CFR setting information through SIB1, SIB x (x>1), or MCCH message and receives broadcast transmission may continue to maintain the broadcast CFR configuration even after switching to connected mode. Here, the initial BWP of connected mode may be configured according to the method described later.

Method 1: Broadcast CFR may be applied only when the initial BWP configured according to SIB1 is maintained in connected mode and broadcast data is received. Here, if the broadcast CFR includes the initial BWP, the UE may expand the bandwidth by the broadcast CFR depending on the broadcast reception time. If the broadcast CFR does not include the initial BWP or the SCS is different, the UE may receive the broadcast CFR by performing BWP switching at the time of receiving broadcast data.

Method 2: The UE may separately receive initial BWP configuration information supporting broadcast CFR from SIB x (x>1) or MCCH message, and, in connected mode, the UE may apply the initial BWP configurations received from SIBx (x>1) or MCCH message. Here, the initial BWP may be broadcast CFR or may be configured to include broadcast CFR. Therefore, the UE does not need to expand or switch bandwidth to receive broadcast CFR.

After the UE switches to connected mode, the base station may configure a UE-specific BWP. When the UE reports receipt of broadcast data, the base station may configure the UE-specific BWP to include the broadcast CFR.

Additionally, the UE-specific BWP may also include multicast CFR. Here, the UE may receive broadcast and multicast transmissions through one CFR, or may receive both broadcast and multicast transmissions through two CFRs (i.e., broadcast CFR and multicast CFR).

When receiving the UE common PDSCH, for limited buffer rate matching (LBRM) operation, the base station may provide resource block configuration information, max MIMO layer setting information, and maximum modulation order configuration information for BWP or CFR to the UE.

As an example, if one CFR supports both multicast and broadcast, the UE may receive broadcast and multicast transmission according to the resource block configuration information of the broadcast CFR, max MIMO layer configuration information, and max modulation order configuration information.

As another example, if one CFR supports both multicast and broadcast, the UE may receive broadcast and multicast transmission according to the resource block configuration information of the multicast CFR, max MIMO layer configuration information, and max modulation order configuration information.

As another example, assume that multicast and broadcast transmissions are received through two CFRs (i.e., broadcast CFR and multicast CFR). The UE may receive broadcast transmission according to the broadcast CFR resource block settings, max MIMO layer configurations, and max modulation order configurations. Additionally, the UE may receive multicast transmission according to the multicast CFR resource block configurations, max MIMO layer configurations, and max modulation order configurations.

Timer-based deactivation processing method for transmitting and receiving multicast and broadcast data

Hereinafter, when receiving multicast and broadcast data, BWP switching considering the MTCH transmission window, deactivation of a specific cell, and RRC connection termination method will be described.

In the present disclosure, the UE may drive a BWP-inactivity timer as in Embodiment 5, which will be described later. Additionally or alternatively, the UE may drive the SCell deactivation timer (SCellDeactivationTimer) (referring to Embodiment 2) or/and the data inactivity timer (dataInactivityTimer) (referring to Embodiment 3) according to one of the following BWP-inactivityTimer driving conditions.

When the UE receives a broadcast MTCH within the MTCH transmission window for the G(group)-RNTI it wants to receive, the UE in RRC_connected may start or restart BWP-InactivityTimer according to options described later.

Option 1: When successfully decoding the GC-PDCCH for G-RNTI within the MTCH transmission window, the UE may start or restart the BWP-InactivityTimer at the beginning or end or the first or last symbol of the MTCH transmission window. If configured, the UE may switch to the default BWP or switch to the initial BWP immediately after the timer expires.

Option 2: When successfully decoding the GC-PDCCH for G-RNTI within the MTCH transmission window, the UE may start or restart the BWP-InactivityTimer at the start or end or the first symbol or last symbol of the monitoring occasion (MO) related to the TCI state of the UE.

Here, the MO may be the first MO associated with the TCI state in the MTCH transmission window. The TCI state of the terminal may be used by the UE for recent unicast reception of PDCCH and/or PDSCH or unicast transmission of PUCCH and/or PUSCH. Alternatively, the TCI state for unicast may be determined by the latest RACH procedure performed by the UE. The UE switch to the default BWP (if set) or switch to the initial BWP immediately after the timer expires.

Option 3: The UE may start or not restart BWP-InactivityTimer to receive broadcast PDCCH and broadcast PDSCH. If configured, the UE may switch to the default BWP or switch to the initial BWP immediately after the timer expires.

Option 4: The UE may start or restart BWP-InactivityTimer to receive broadcast PDCCH and broadcast PDSCH in the MTCH transmission window. However, after the timer expires, the UE may switch to the default BWP (if configured) or switch to the initial BWP after the MTCH transmission window ends.

Additionally or alternatively, when the UE receives a multicast PDCCH/PDSCH transmitting TB for the G-RNTI it wants to receive, the UE in RRC_CONNECTED may start or restart the BWP-InactivityTimer in the manner described below.

As an example, when the UE receives a UE-specific PDCCH scheduling PTP retransmission of the same TB for the G-RNTI, the UE may start or restart the BWP-InactivityTimer.

As another example, when the UE receives a UE-specific PDCCH scheduling PTP transmission of a TB for G-RNTI (however, if the UE does not receive a multicast PDCCH/PDSCH scheduling the same TB), the UE may start or restart BWP-InactivityTimer.

As another example, if the UE has received a UE-specific PDCCH scheduling PTP retransmission of the same TB for the G-RNTI or a PTP bearer is established for the G-RNTI, the UE may start or restart the BWP-InactivityTimer only when it has successfully decoded the UE-specific PDCCH scheduling PTP retransmission of the same TB for the G-RNTI.

Here, the UE may or may not start the BWP-InactivityTimer when successfully decoding the GC-PDCCH scheduling the same TB for the G-RNTI.

Additionally or alternatively, if the UE receives a broadcast MCCH transmission within the MCCH transmission window for the MCCH-RNTI, the UE in RRC_CONNECTED may start or restart the BWP-InactivityTimer as an option described below.

Option 1 : When the UE successfully decodes the GC-PDCCH for MCCH-RNTI within the MCCH transmission window, it may start or restart the BWP-InactivityTimer from the beginning or end of the MCCH transmission window or the first symbol or last symbol. If configured, the UE may switch to the default BWP or switch to the initial BWP immediately after the timer expires.

Option 2 : When the UE successfully decodes the GC-PDCCH for the MCCH-RNTI within the MCCH transmission window, it may start or restart the BWP-InactivityTimer from the beginning or end of the MO or the first symbol or the last symbol related to the TCI state of the UE.

Here, the MO may be the first MO related to the TCI state in the MCCH transmission window. The TCI state of the UE may be used by the terminal for recent unicast reception of PDCCH and/or PDSCH or unicast transmission of PUCCH and/or PUSCH. Alternatively, the TCI state for unicast may be determined by the latest RACH procedure performed by the UE. The UE may switch to the default BWP (if configured) or switch to the initial BWP immediately after the timer expires.

Option 3: The UE may start or not restart the BWP-InactivityTimer and MCCH broadcast PDSCH for broadcast PDCCH reception. If configured, the UE may switch to the default BWP or switch to the initial BWP immediately after the timer expires.

Option 4: The UE may start or restart BWP-InactivityTimer to receive broadcast PDCCH and broadcast PDSCH in the MCCH transmission window. However, after the timer expires, the UE may switch to the default BWP (if configured) or to the initial BWP after the MCCH transmission window ends, the MCCH repetition period ends, or the MCCH modification period ends.

For broadcast reception, the UE may support that the association between PDCCH monitoring cases and SSBs within the MTCH scheduling window is defined as follows. In the scheduling window, the [x*N+K]th PDCCH monitoring opportunity(s) for the MTCH may correspond to the Kth transmitted SSB.

Here, x = 0, 1, ... May be CEIL (number of PDCCH monitoring cases in MTCH transmission window/N).

To associate PDCCH monitoring opportunities for MTCH and SSB, the UE may assume that the PDCCH for the MTCH scrambled by the G-RNTI in the MTCH scheduling window is transmitted in at least one PDCCH monitoring opportunity corresponding to each transmitted SSB.

The UE may select at least one of the SSBs based on SSB measurement for unicast or TCI state. Next, the UE may monitor at least the PDCCH monitoring occasion related to the selected SSB or TCI state for unicast. The TCI state for unicast has recently been used by the UE for unicast reception of PDCCH and/or PDSCH or unicast transmission of PUCCH and/or PUSCH. Alternatively, the TCI state for unicast may be determined by the latest RACH procedure performed by the UE.

FIG. 8 is a diagram for describing a communication performance operation of a terminal in a wireless communication system to which the present disclosure may be applied.

The UE may receive configuration information related to at least one secondary cell (SCell) from the base station (S810).

The configuration information may include information for configuring one or more SCells for the UE and parameters for the one or more SCells.

The UE may receive first information for activating a specific SCell among at least one SCell from the base station (S820).

As an example, the UE may receive a MAC CE including first information for activating a specific SCell from the base station. As another example, the UE may receive a DCI or/and RRC message including the first information from the base station.

Based on the first data being received from the base station on a specific SCell, the UE may start or restart the SCell deactivation timer associated with the specific SCell (S830).

Here, the first data may include at least one of multicast data or unicast data and may not include broadcast data.

For example, broadcast data may not include downlink control information (DCI) CRC (cyclic redundancy check) scrambled by a G(group)-RNTI (radio network temporary identifier) or G-CS(configured scheduling)-RNTI indicating downlink (DL) assignment for broadcast.

As another example, the multicast data may include DCI with CRC scrambled by G-RNTI or G-CS-RNTI indicating downlink allocation for multicast.

As another example, the multicast data may include a group common physical downlink shared channel (PDSCH) scheduled by DCI.

As another example, the multicast data may include point-to-point (PTP) retransmission data associated with a G-RNTI or G-CS-RNTI scheduled by DCI.

As another example, the multicast data may include a group common semi-persistent (SPS) PDSCH.

As another example of the present disclosure, based on second data including broadcast data being received within a transmission window, the UE may start or restart the SCell deactivation timer after the transmission window ends.

Here, the transmission window may include one or more physical downlink control channel (PDCCH) monitoring occasions for the same G-RNTI.

As an example, based on the SCell deactivation timer expiring, a common frequency resource (CFR) associated with a specific SCell may be deactivated.

As another example, the inactivity timer of a CFR associated with a specific SCell may be stopped based on the expiration of the SCell inactivity timer.

As another example, based on the SCell deactivation timer expiring, group common SPS resources based on the CFR associated with a specific SCell may be released or deactivated.

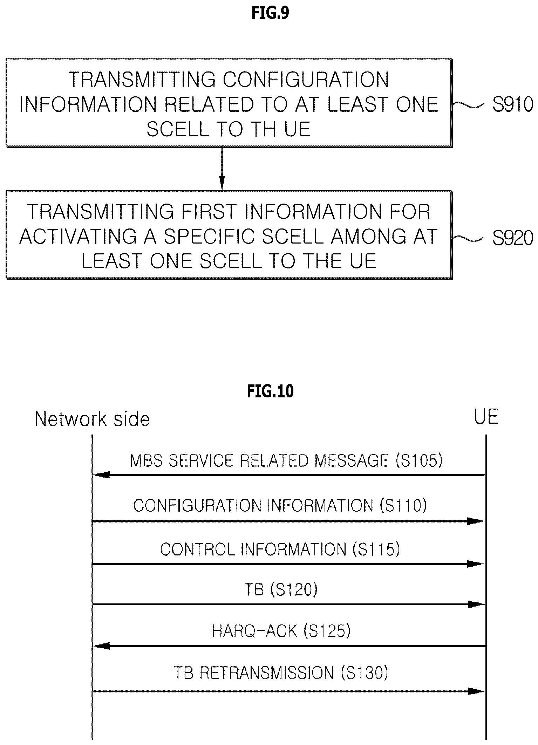

FIG. 9 is a diagram for describing the communication performance operation of a base station in a wireless communication system to which the present disclosure may be applied.

The base station may transmit configuration information related to at least one secondary cell (SCell) to the UE (S910).

The base station may transmit first information for activating a specific SCell among at least one SCell to the terminal (S920).

Based on first data being transmitted to the UE on a specific SCell, the SCell deactivation timer associated with the specific SCell may be started or restarted (by the UE). Here, the first data may include at least one of multicast data or unicast data and may not include broadcast data.

Since the descriptions related to S910 and S920 correspond to the descriptions related to S810 and S820, overlapping descriptions will be omitted.

Hereinafter, when receiving multicast and broadcast data, BWP switching considering the MTCH transmission window, deactivation of a specific cell, and RRC connection termination method will be described in more detail.

Embodiment 1

In a basic wireless communication system, up to four BWPs may be configured for a UE in connected mode, and the UE may activate only one BWP at a time. If there is UE-specific scheduling, the UE may start or restart BWP-InactivityTimer. When 'BWP-InactivityTimer' expires, the UE may switch the BWP to the default BWP. If the default BWP is not configured, the UE may switch the BWP to the initial BWP.

Embodiment 1-1

When DCI for a specific cast type or specific G-RNTI is received, the UE may start or restart BWP-InactivityTimer. If a DCI other than a DCI for a specific cast type or G-RNTI is received, the UE may not start/restart the BWP-InactivityTimer.

As an example, the DCI scheduling the multicast PDSCH or/and the UE that has received the multicast PDSCH may start or restart the BWP-InactivityTimer. However, when receiving a broadcast PDSCH, the UE may not start or restart BWP-InactivityTimer.

That is, when receiving the PDCCH of a DCI whose CRC is scrambled with a specific G-RNTI, such as a multicast G-RNTI, the UE may start or restart the BWP-InactivityTimer. When receiving the PDCCH of a DCI whose CRC is scrambled with a specific G-RNTI, such as a broadcast G-RNTI, the UE may not start or restart the BWP-InactivityTimer.

As another example, assume that the CFR is not set for the default BWP or initial BWP or the G-RNTI to be received is not provided. When receiving the PDCCH of the group common DCI for both broadcast and multicast in the currently active BWP, the terminal may not start or restart the BWP-InactivityTimer.

Additionally or alternatively, upon receiving the DCI's PDCCH scheduling PTP retransmission for both broadcast and multicast, the UE may not start or restart the BWP-InactivityTimer. Here, the DCI is CRC scrambled with C-RNTI or CS-RNTI, and PTP retransmission for the TB transmitted through PTM may be scheduled.

Assume that the broadcast CFR is not configured for the basic BWP or initial BWP, or the G-RNTI to be received is not provided. If the PDCCH of the group common DCI for broadcast is received in the currently active BWP, the UE may not start or restart the BWP-InactivityTimer.

Additionally, when receiving the PDCCH of the DCI scheduling PTP retransmission for broadcast, the UE may not start or restart the BWP-InactivityTimer. Here, the DCI is CRC scrambled with C-RNTI or CS-RNTI, and PTP retransmission for the TB transmitted through broadcast PTM may be scheduled.

As another example, assume that multicast CFR is not configured for the basic BWP or initial BWP or the G-RNTI to be received is not provided. When receiving the PDCCH of the group common DCI for multicast in the currently activated BWP, the UE may not start or restart the BWP-InactivityTimer.

Additionally, when receiving the PDCCH of the DCI scheduling PTP retransmission for multicast, the UE may not start or restart the BWP-InactivityTimer. Here, the DCI is CRC scrambled with C-RNTI or CS-RNTI, and PTP retransmission for the TB transmitted through multicast PTM may be scheduled.

## Embodiment 1-2

BWP-InactivityTimer may not be configured for a UE receiving multicast or broadcast transmission.

As an example, the base station may not configure BWP-InactivityTimer for the UE that reported an interest indication.

As another example, even if the base station configures the BWP-InactivityTimer, if CFR is configured for the currently activated BWP, the UE may not start or restart the BWP-InactivityTimer and may not perform BWP switching according to the BWP-InactivityTimer. Additionally, the UE may stop the currently running BWP-InactivityTimer.

As another example, even if the base station configures BWP-InactivityTimer for the UE, when receiving a broadcast transmission or multicast transmission through a currently active BWP, the UE may not start or restart BWP-InactivityTimer and may not perform BWP switching according to BWP-InactivityTimer. Additionally, the UE may stop the currently running BWP-InactivityTimer.

## Embodiment 1-3

If the DCI received from the currently active BWP schedules group common PDSCH transmission even if the BWP-InactivityTimer expires, the UE may perform BWP switching after receiving the group common PDSCH or immediately after transmitting HARQ-ACK/NACK for receiving the group common PDSCH.

## Embodiment 1-4

If CFR is not configured for the basic BWP or initial BWP or the G-RNTI the UE wants to receive is not provided, even if BWP-InactivityTimer is configured, the UE may not start or restart BWP-InactivityTimer regardless of which PDCCH it receives from the currently active BWP. And, the UE may stop the currently running BWP-InactivityTimer.

Here, 1) If MBS is configured for the currently activated BWP and MBS is not configured for the basic/initial BWP, the UE may not drive the timer. 2) If MBS is not configured for the currently activated BWP and MBS is not configured for the basic/initial BWP, the UE may drive the timer according to PDCCH reception of the currently activated BWP. 3) If MBS is configured for the currently activated BWP and MBS is also configured for the default/initial BWP, the UE may drive the timer according to PDCCH reception of the currently activated BWP.

Additionally or alternatively, if MBS is configured for the currently activated BWP, the UE may not run the timer even if MBS is configured for the default/initial BWP. That is, if MBS is configured for the currently activated BWP, the UE may not run the timer regardless of the MBS configuration of the basic/initial BWP.

Here, MBS configurations may mean CFR settings, settings related to G-RNTI to be received, configurations related to multicast reception, or configurations related to broadcast reception. And, the timer may mean BWP-InactivityTimer.

If the timer is not running, the UE may start or not restart the timer depending on reception of the PDCCH of the DCI that is CRC scrambled by C-RNTI, CS-RNTI, G(group)-RNTI, G-CS(configured scheduling)-RNTI, etc.

## Embodiment 2

Embodiment 2 relates to a method in which the UE starts receiving group common transmission after BWP switching.

If the BWP-InactivityTimer expires and the UE switches to the basic BWP or initial BWP, the UE may automatically start GC (Group Common)-PDCCH monitoring in the basic BWP or initial BWP. As another example, the UE may separately start GC-PDCCH monitoring only when the base station indicates GC-PDCCH monitoring through an RRC message, MAC CE, or DCI. Here, the UE may receive DCI from the basic BWP or initial BWP.

The base station may configure whether to immediately start monitoring GC-PDCCH in the CFR connected to the destination BWP when a specific UE switches BWP through an RRC message, MAC CE, or DCI. Whether to immediately start monitoring the GC-PDCCH may be configured for each BWP or CFR that is the switching destination, or for each serving cell. When switching to a BWP, CFR, or serving cell that is not configured to immediately start monitoring the GC-PDCCH, the base station may separately indicate the UE whether to monitor the GC-PDCCH through an RRC message or MAC CE or DCI.

When switched to BWP #2 according to DCI received from BWP #1, the base station may indicate BWP ID=2 through DCI and indicate to the terminal whether to monitor GC-PDCCH from the CFR connected to BWP #2 or activate the connected CFR.

When monitoring the GC-PDCCH or activating the connected CFR is indicated by the DCI, the UE may switch to BWP #2, activate the CFR connected to BW P#2, and monitor the GC-PDCCH.

If the DCI does not direct monitoring of the GC-PDCCH or activation of the associated CFR, or if the DCI indicates the DCI to stop monitoring the GC-PDCCH or deactivate the associated CFR, after switching to BWP #2, the UE may deactivate the CFR associated with BWP #2 and not monitor the GC-PDCCH.

If BWP ID=2 is indicated by the DCI of BWP #2 and GC-PDCCH monitoring or activation of the connected CFR is indicated, the UE may activate the CFR connected to BWP #2 and monitor the GC-PDCCH.

Embodiment 3

Embodiment 3 relates to a method in which a UE performs PTP transmission and reception after BWP switching.

The base station may configure split MBS bearers for different BWPs belonging to the same serving cell. One split MBS bearer means one MBS bearer split into a group common PTM-based bearer belonging to BWP #1 and a UE-only PTP-based bearer belonging to BWP #2.

If the BWP-InactivityTimer expires and switches from a BWP to a basic BWP or initial BWP, the UE may activate the PTP bearer or PTM bearer mapped to the basic BWP or initial BWP. Here, the activated PTP bearer or PTM bearer may belong to the same split bearer as the bearer mapped to the previous BWP.

As another example, the UE may deactivate a bearer mapped to a previous BWP belonging to the same split bearer.

As another example, when the BWP-InactivityTimer expires and a specific BWP is switched to the basic BWP or initial BWP, the UE may immediately start monitoring the PDCCH for PTP initial transmission or retransmission.

The base station may configure whether to immediately start monitoring the PDCCH for PTP (re)transmission in the CFR connected to the destination BWP when a specific UE switches BWP through an RRC message, MAC CE, or DCI. Whether to immediately start monitoring the PDCCH may be configured for each BWP or CFR that is the switching destination, or for each serving cell. When switched to a BWP, CFR, or serving cell that is not configured to immediately start monitoring the PDCCH, the base station may separately indicate whether to monitor the PDCCH for PTP (re)transmission through an RRC message, MAC CE, or DCI.

Here, when retransmitting the TB received in the previous BWP, the base station may configure the TB transmission in the previous BWP and the TB retransmission in the switched BWP (i.e., basic BWP or initial BWP) to be scheduled with the same HARQ process ID. That is, for the same G-RNTI, the HPN value of the DCI for TB transmission of the previous BWP may be configured to be the same as the HPN value of the DCI for TB retransmission of the switched BWP.

Embodiment 4

The base station may configure BWP-InactivityTimer and a separate CFR-InactivityTimer (i.e., a timer related to activation of CFR) for the UE. When receiving DCI for G-RNTI or G-CS-RNTI, the UE may start or restart CFR-InactivityTimer.

As another example, when receiving DCI for a specific cast type or specific G-RNTI, the UE may start or restart CFR-InactivityTimer. If a DCI other than the DCI for a specific cast type or specific G-RNTI is received, the UE may not start or restart the CFR-InactivityTimer. When the CFR-InactivityTimer of the CFR associated with the currently activated BWP expires, the UE may switch to the default BWP or the CFR associated with the initial BWP.

As another example, even if the CFR-InactivityTimer of the CFR associated with the activated BWP expires, if the BWP-InactivityTimer for the activated BWP does not expire, the UE does not switch to the basic BWP or the CFR associated with the initial BWP. That is, only if both the CFR-InactivityTimer of the CFR associated with the activated BWP and the BWP-InactivityTimer for the activated BWP have expired, the UE may switch to the CFR associated with the basic BWP or initial BWP, and may also switch to the basic BWP or initial BWP.

Here, if the CFR-InactivityTimer or BWP-InactivityTimer is started or restarted according to PDCCH reception, the UE may not switch to the CFR associated with the basic BWP or initial BWP, and may not switch to the basic BWP or initial BWP.

As another example, even if only one timer between a CFR-InactivityTimer for CFR associated with activated BWP and a BWP-InactivityTimer for activated BWP expires, the UE may switch to the basic BWP or the CFR associated with the initial BWP, and may switch to the basic BWP or the initial BWP.

Embodiment 5

BWP switching for a serving cell may be used to activate an inactive BWP and deactivate an active BWP at once. BWP switching may be controlled by PDCCH, bwp-InactivityTimer, RRC signaling indicating DL assignment or UL grant, or by the MAC entity itself at the start of the random access procedure or upon detecting a consistent LBT failure in the SpCell.

Upon RRC (re)configuration of firstActiveDownlinkBWP-Id and/or firstActiveUplinkBWP-Id for SpCell or activation of SCell, the DL BWP and/or UL BWP indicated by firstActiveDownlinkBWP-Id and/or firstActiveUplinkBWP-Id, respectively, may be active without receiving a PDCCH indicating a DL allocation or UL grant. The active BWP for the serving cell may be indicated by RRC or PDCCH. For unpaired spectrum, the DL BWP may be paired with the UL BWP, and BWP switching may be common to both UL and DL.

For each SCell, the dormant BWP may be configured to the dormant BWP-Id by RRC signaling. Entering or leaving the dormant BWP for the SCell can be performed by BWP switching for each SCell or dormant SCell group according to the indications of the PDCCH. Dormant SCell group configuration may be configured by RRC signaling. Upon receiving the PDCCH indicating leaving the dormant BWP, the DL BWP indicated by firstOutsideActiveTimeBWP-Id or firstWithinActiveTimeBWP-Id may be activated.

When a PDCCH indicating entry into a dormant BWP is received, the DL BWP indicated by the dormant BWP-Id may be activated. Dormant BWP configurations for SpCell or PUCCH SCell may not be supported.

For each activated serving cell configured with a BWP, the MAC entity may perform as described later:

1> if a BWP is activated and the active DL BWP for the Serving Cell is not the dormant BWP:

2> transmit on UL-SCH on the BWP;
2> transmit on RACH on the BWP, if PRACH occasions are configured;
2> monitor the PDCCH on the BWP;
2> monitor the GC-PDCCH on CFR associated with the BWP;
2> transmit PUCCH on the BWP, if configured;
2> report CSI for the BWP;
2> transmit SRS on the BWP, if configured;
2> receive DL-SCH on the BWP and CFR associated with the BWP;
2> receive GC-PDSCH on CFR associated with the BWP;
2> (re)initialize the suspended configured uplink grant of grant type 1 configured in the active BWP according to the stored configuration and start at a specific symbol;
2> if lbt-FailureRecoveryConfig is configured:

3> stop the lbt-FailureDetectionTimer, if running;
3> set LBT_COUNTER to 0;
3> monitor LBT failure indications from lower layers

1> if a BWP is activated and the active DL BWP for the Serving Cell is dormant BWP:

2> stop the bwp-InactivityTimer of this Serving Cell, if running.
2> stop the CFR-InactivityTimer of this Serving Cell, if running.
2> not monitor the PDCCH on the BWP;
2> not monitor the PDCCH for the BWP;
2> not monitor the GC-PDCCH on CFR associated with the BWP;
not receive DL-SCH on the BWP and CFR associated with the BWP;

1> if a BWP is deactivated:
2> not transmit on UL-SCH on the BWP;
2> not transmit on RACH on the BWP;
2> not monitor the PDCCH on the BWP;
2> not monitor the GC-PDCCH on CFR associated with the BWP;
2> not transmit PUCCH on the BWP;
2> not report CSI for the BWP;
2> not transmit SRS on the BWP;

  2> not receive DL-SCH on the BWP and CFR associated with the BWP;

  2> not receive GC-PDSCH on CFR associated with the BWP;

  2> clear any configured downlink assignment and configured uplink grant of configured grant Type 2 on the BWP;

  2> clear any configured downlink assignment (i.e. group common SPS resources) on the CFR associated with the BWP;

  2> suspend any configured uplink grant of configured grant Type 1 on the inactive BWP.

When a random access procedure starts in a serving cell, after selecting a carrier for performing the random access procedure, the MAC entity may perform an operation described later on the selected carrier of the serving cell.

 1> if PRACH occasions are not configured for the active UL BWP:

  2> switch the active UL BWP to BWP indicated by initialUplinkBWP;

  2> if the Serving Cell is an SpCell:

   3> switch the active DL BWP to BWP indicated by initialDownlinkBWP.

   3> switch the CFR associated with the active DL BWP to the CFR associated with BWP indicated by initialDownlinkBWP.

 1> else:

  2> if the Serving Cell is an SpCell:

   3> if the active DL BWP does not have the same bwp-Id as the active UL BWP:

    4> switch the active DL BWP to the DL BWP with the same bwp-Id as the active UL BWP.

    4> switch the CFR associated with the active DL BWP to the CFR associated with the DL BWP with the same bwp-Id as the active UL BWP.

 1> stop the bwp-InactivityTimer associated with the active DL BWP of this Serving Cell, if running.

 1> stop the CFR-InactivityTimer associated with the CFR associated with the active DL BWP of this Serving Cell, if running.

 1> if the Serving Cell is SCell:

  2> stop the bwp-InactivityTimer associated with the active DL BWP of SpCell, if running.

  2> stop the CFR-InactivityTimer associated with the CFR associated with the active DL BWP of SpCell, if running.

 1> perform the Random Access procedure on the active DL BWP of SpCell and active UL BWP of this Serving Cell.

When the MAC entity receives the PDCCH for BWP switching of the serving cell, the MAC entity may perform an operation described later.

 1> if there is no ongoing Random Access procedure associated with this Serving Cell; or

 1> if the ongoing Random Access procedure associated with this Serving Cell is successfully completed upon reception of this PDCCH addressed to C-RNTI:

  2> cancel, if any, triggered consistent LBT failure for this Serving Cell;

  2> perform BWP switching to a BWP indicated by the PDCCH.

  2> perform switching to the CFR associated with the BWP indicated by the PDCCH.

The MAC entity may perform the operations described below for each activated serving cell set with bwp-InactivityTimer.

 1> if the defaultDownlinkBWP-Id is configured, and the active DL BWP is not the BWP indicated by the defaultDownlinkBWP-Id, and the active DL BWP is not the BWP indicated by the dormantBWP-Id if configured; or

 1> if the defaultDownlinkBWP-Id is not configured, and the active DL BWP is not the initialDownlinkBWP, and the active DL BWP is not the BWP indicated by the dormantBWP-Id if configured:

2> if a PDCCH addressed to C-RNTI or CS-RNTI indicating downlink assignment or uplink grant is received on the active BWP; or

2> if a PDCCH addressed to C-RNTI or CS-RNTI indicating downlink assignment or uplink grant is received for the active BWP; or

if a PDCCH addressed to G-RNTI or G-CS-RNTI indicating downlink assignment for multicast is received on the CFR associated with the active BWP or for the CFR associated with the active BWP and if a PDCCH scheduling PTP retransmission associated to the G-RNTI or G-CS-RNTI has been not received; or

2> if a PDCCH addressed to G-RNTI or G-CS-RNTI indicating downlink assignment for broadcast is received within a transmission window on the CFR associated with the active BWP or for the CFR associated with the active BWP and the transmission window ends; or

2> if a MAC PDU is transmitted in a configured uplink grant and LBT failure indication is not received from lower layers; or

2> if a MAC PDU is received in a downlink assignment for G-RNTI corresponding to broadcast within a transmission window and the transmission window ends; or

2> if a MAC PDU is received in a configured downlink assignment for G-RNTI or G-CS-RNTI corresponding to broadcast within a transmission window and the transmission window ends; or

2> if a MAC PDU is received in a configured downlink assignment for C-RNTI or G-RNTI corresponding to multicast:

> 3> if there is no ongoing Random Access procedure associated with this Serving Cell; or
> 3> if the ongoing Random Access procedure associated with this Serving Cell is successfully completed upon reception of this PDCCH addressed to C-RNTI:

> > 4> start or restart the bwp-InactivityTimer associated with the active DL BWP.
> > 4> start or restart the CFR-InactivityTimer associated with the CFR associated with the active DL BWP.

2> if the bwp-InactivityTimer associated with the active DL BWP expires:

> 3> if the defaultDownlinkBWP-Id is configured:

> > 4> perform BWP switching to a BWP indicated by the defaultDownlinkBWP-Id.
> > 4> perform switching to the CFR associated with the BWP indicated by the defaultDownlinkBWP-Id.

> 3> else:

> > 4> perform BWP switching to the initialDownlinkBWP.
> > 4> perform switching to the CFR associated with the initialDownlinkBWP.

1> if a PDCCH for BWP switching is received, and the MAC entity switches the active DL BWP and the CFR associated with the active DL BWP:

2> if the defaultDownlinkBWP-Id is configured, and the MAC entity switches to the DL BWP which is not indicated by the defaultDownlinkBWP-Id and is not indicated by the dormantBWP-Id if configured; or

2> if the defaultDownlinkBWP-Id is not configured, and the MAC entity switches to the DL BWP which is not the initialDownlinkBWP and is not indicated by the dormantBWP-Id if configured:

> 3> start or restart the bwp-InactivityTimer associated with the active DL BWP.
> 3> start or restart the CFR-InactivityTimer associated with the CFR associated with the active DL BWP.

Here, the transmission window may be configured to more than one PDCCH monitoring opportunity for the same G-RNTI. For established DL allocations associated with a G-RNTI or G-CS-RNTI, i.e. a group common SPS, the transmission window may be set to one or more SPS PDSCH transmissions for the same G-RNTI or the same G-CS-RNTI. And, when the random access procedure starts in the SCell, both the SCell and SpCell may be associated with the random access procedure.

Embodiment 6

Embodiment 6 relates to a method of setting a timer (i.e., 'sCellDeactivationTimer') related to deactivation of the SCell for a UE receiving group common transmission.

If the sCellDeactivationTimer for a specific SCell has expired, the UE may deactivate all CFR(s) related to the SCell and stop the 'CFR-InactivityTimer' of the CFR related to the SCell.

Additionally, when the sCellDeactivationTimer for a specific SCell expires, the UE may release or deactivate all group common SPSs of the CFR related to the SCell.

When the UE receives a CRC scrambled DCI with a specific G-RNTI or a specific G-CS-RNTI from a specific SCell, it may start or restart the sCellDeactivationTimer for the corresponding SCell.

As another example, if the received DCI schedules a group common PDSCH, the UE may start or restart sCellDeactivationTimer for the corresponding SCell.

As another example, when receiving a PTP retransmission for multicast/broadcast transmission, or receiving a group common SPS PDSCH transmission, the UE may start or restart sCellDeactivationTimer for the corresponding SCell.

Here, the specific G-RNTI or specific G-CS-RNTI may be set by the base station. As another example, the specific G-RNTI or specific G-CS-RNTI may be a G-RNTI or G-CS-RNTI for multicast.

As another example, when receiving a DCI that is CRC scrambled with a G-RNTI or G-CS-RNTI other than a specific G-RNTI or a specific G-CS-RNTI, the UE may not start or restart sCellDeactivationTimer for the corresponding SCell.

For example, when receiving a DCI that is CRC scrambled with a G-RNTI or G-CS-RNTI for broadcast, the UE may not start or restart sCellDeactivationTimer for the corresponding SCell.

If a MAC entity is configured with one or more SCells, the network may activate or deactivate the configured SCells. When setting the SCell, the SCell may be deactivated unless the 'sCellState' parameter is set to 'activated' for the SCell by the upper layer.

SCell activation/deactivation Upon receiving a MAC CE, a configured SCell may be activated and/or deactivated. As another example, sCellState may be configured for each set SCell, and the associated SCell may be activated according to the SCell settings. As another example, when the sCellDeactivationTimer timer is configured for each set SCell and the timer expires, the corresponding SCell may be deactivated.

The MAC entity may perform operations described below for each SCell configured.

1> if an SCell is configured with sCellState set to activated upon SCell configuration, or an SCell Activation/Deactivation MAC CE is received activating the SCell:

> 2> if the SCell was deactivated prior to receiving this SCell Activation/Deactivation MAC CE; or
> 2> if the SCell is configured with sCellState set to activated upon SCell configuration:

>> 3> if firstActiveDownlinkBWP-Id is not set to dormant BWP:

>>> 4> activate SCell according to MAC CE activation timing and direct SCell activation timing;

>>>> 5> SRS transmissions on the SCell;
>>>> 5> CSI reporting for the SCell;
>>>> 5> PDCCH monitoring on the SCell;
>>>> 5> PDCCH monitoring for the SCell;
>>>> 5> GC-PDCCH monitoring on the CFR associated with the SCell;
>>>> 5> GC-PDCCH monitoring for the CFR associated with the SCell;
>>>> 5> PUCCH transmissions on the SCell, if configured.

>> 3> else (i.e. firstActiveDownlinkBWP-Id is set to dormant BWP):

>>> 4> stop the bwp-InactivityTimer of this Serving Cell, if running.
>>> 4> stop the CFR-InactivityTimer of this Serving Cell, if running.
>>> 4> activate the DL BWP and UL BWP indicated by firstActiveDownlinkBWP-Id and firstActiveUplinkBWP-Id respectively.

>> 3> activate the CFR associated with the DL BWP indicated by firstActiveDownlinkBWP-Id.

> 2> Start or restart the sCellDeactivationTimer associated with the SCell depending on the MAC CE activation timing and direct SCell activation timing;
> 2> if the active DL BWP is not the dormant BWP:

3> (re-)initialize any suspended configured uplink grants of configured grant Type 1 associated with this SCell according to the stored configuration, if any, and to start in the symbol;
3> trigger PHR.

1> else if an SCell Activation/Deactivation MAC CE is received deactivating the SCell; or
1> if the sCellDeactivationTimer associated with the activated SCell expires:

2> deactivate the SCell according to the timing defined in TS 38.213 [6];
2> stop the sCellDeactivationTimer associated with the SCell;
2> stop the bwp-InactivityTimer associated with the SCell;
2> stop the CFR-InactivityTimer associated with the CFR associated with the SCell;
2> deactivate any active BWP associated with the SCell;
2> deactivate any CFR associated with any active BWP associated with the SCell;
2> clear any configured downlink assignment and any configured uplink grant Type 2 associated with the SCell respectively;
2> clear any configured downlink assignment (i.e. any group common SPS resource) on any CFR associated with the SCell respectively;
2> clear any PUSCH resource for semi-persistent CSI reporting associated with the SCell;
2> suspend any configured uplink grant Type 1 associated with the SCell;
2> flush all HARQ buffers associated with the SCell;
2> cancel, if any, triggered consistent LBT failure for the SCell.

1> if PDCCH on the activated SCell indicates an uplink grant or downlink assignment; or
1> if PDCCH on the Serving Cell scheduling the activated SCell indicates an uplink grant or a downlink assignment for the activated SCell; or
1> if PDCCH on the activated SCell indicates an group common PDSCH resource (i.e. group common downlink assignment); or
1> if a PDCCH addressed to G-RNTI or G-CS-RNTI indicating downlink assignment for multicast is received on the CFR associated with the active BWP or for the CFR associated with the active BWP and if a PDCCH scheduling PTP retransmission associated to the G-RNTI or G-CS-RNTI has been not received; or
1> if a PDCCH addressed to G-RNTI or G-CS-RNTI indicating downlink assignment for broadcast is received within a transmission window on the CFR associated with the active BWP or for the CFR associated with the active BWP and the transmission window ends; or
1> if a MAC PDU is transmitted in a configured uplink grant and LBT failure indication is not received from lower layers; or
1> if a MAC PDU is received in a downlink assignment for G-RNTI corresponding to broadcast within a transmission window and the transmission window ends; or
1> if a MAC PDU is received in a configured downlink assignment for G-RNTI or G-CS-RNTI corresponding to broadcast within a transmission window and the transmission window ends; or
1> if a MAC PDU is received in a configured downlink assignment for C-RNTI or G-RNTI corresponding to multicast:

2> restart the sCellDeactivationTimer associated with the SCell.

1> if the SCell is deactivated:

2> not transmit SRS on the SCell;
2> not report CSI for the SCell;
2> not transmit on UL-SCH on the SCell;
2> not transmit on RACH on the SCell;
2> not monitor the PDCCH on the SCell;
2> not monitor the PDCCH for the SCell;
2> not transmit PUCCH on the SCell.

HARQ feedback for MAC PDUs including SCell activation/deactivation MAC CE may not be affected by PCell, PSCell, and PUCCH SCell interruptions due to SCell activation/deactivation. If the SCell is deactivated, random access procedures in progress in the SCell may be interrupted.

Here, the transmission window may be configured to one or more PDCCH monitoring occasions for the same G-RNTI. For a configured DL allocation associated with a G-RNTI or G-CS-RNTI, i.e. a group common SPS, the transmission window may be configured to one or more SPS PDSCH transmissions for the same G-RNTI or the same G-CS-RNTI.

Embodiment 7

Embodiment 7 relates to a method of setting a data inactivation-related timer (e.g., 'dataInactivityTimer') for a terminal receiving group common transmission.

When receiving a MAC SDU of a traffic logical channel for G-RNTI or a specific cast type, the UE may start or restart dataInactivityTimer.

If the dataInactivityTimer expires, the MAC entity of the UE may report the timer expiration to the RRC entity. The RRC entity of the UE in the RRC_CONNECTED state may release the RRC connection according to the above report and switch to RRC_IDLE or RRC_INACTIVE mode. If a UE in the RRC_INACTIVE state receives a timer expiration report, it may switch to RRC_IDLE mode according to the report.

As an example of the present disclosure, a UE in the RRC_CONNECTED state may start or restart dataInactivityTimer only when it receives the MAC SDU of the MTCH for a specific G-RNTI. When receiving the MAC SDU of the MTCH for another G-RNTI, the UE may not start or restart dataInactivityTimer. Here, specific G-RNTI(s) may be configured by the base station.

As another example of the present disclosure, a UE in the RRC_CONNECTED state may start or restart dataInactivityTimer only when it receives the MAC SDU of the MTCH for multicast. When receiving the MAC SDU of the MTCH for the broadcast, the UE may start or restart dataInactivityTimer.

As another example of the present disclosure, a UE in the RRC_CONNECTED state may start or restart dataInactivityTimer only when it receives the MAC SDU of the MTCH in the multicast CFR. When receiving the MAC SDU of the MTCH in the broadcast CFR, the UE may not start or restart the dataInactivityTimer.

As another example of the present disclosure, a UE in the RRC_CONNECTED state may start or restart dataInactivityTimer only when receiving the MAC SDU of the MTCH. When receiving the MAC SDU of MCCH, the UE may not start or restart dataInactivityTimer.

Here, a UE in the RRC_INACTIVE state may also perform the example of the present disclosure described above.

When in the RRC_CONNECTED state, the UE may be configured by RRC with a data inactivity monitoring function. RRC may configure the dataInactivityTimer timer for the UE and control data inactivity operation.

When dataInactivityTimer is configured, the UE may perform operations described later.

> 1> if any MAC entity receives a MAC SDU for DTCH logical channel, DCCH logical channel, or CCCH logical channel; or
> 1> if any MAC entity receives a MAC SDU for MTCH logical channel for multicast; or
> 1> if a MAC PDU is transmitted in a configured uplink grant and LBT failure indication is not received from lower layers; or
> 1> if a MAC PDU is received in a downlink assignment for G-RNTI corresponding to broadcast within a transmission window and the transmission window ends; or
> 1> if a MAC PDU is received in a configured downlink assignment for G-RNTI or G-CS-RNTI corresponding to broadcast within a transmission window and the transmission window ends; or
> 1> if a MAC PDU is received in a configured downlink assignment for C-RNTI or G-RNTI corresponding to multicast; or
> 1> if any MAC entity transmits a MAC SDU for DTCH logical channel, or DCCH logical channel:

>> 2> start or restart dataInactivityTimer.

> 1> if the dataInactivityTimer expires:

>> 2> indicate the expiry of the dataInactivityTimer to upper layers.

Here, the transmission window may be configured to more than one PDCCH monitoring occasion for the same G-RNTI. For a configured DL allocation associated with a G-RNTI or G-CS-RNTI, i.e. a group common SPS, the transmission window may be configured to one or more SPS PDSCH transmissions for the same G-RNTI or the same G-CS-RNTI.

FIG. 10 is a diagram for describing the signaling procedure of the network side and the UE according to an embodiment of the present disclosure.

FIG. 10 shows an example of signaling between a network side and a terminal (UE) in a situation where the embodiments (e.g., Embodiment 1, Embodiment 2, Embodiment 3, Embodiment 4, Embodiment 5, Embodiment 6, Embodiment 7 or a combination of one or more of the detailed Embodiments thereof) of the present disclosure described above may be applied.

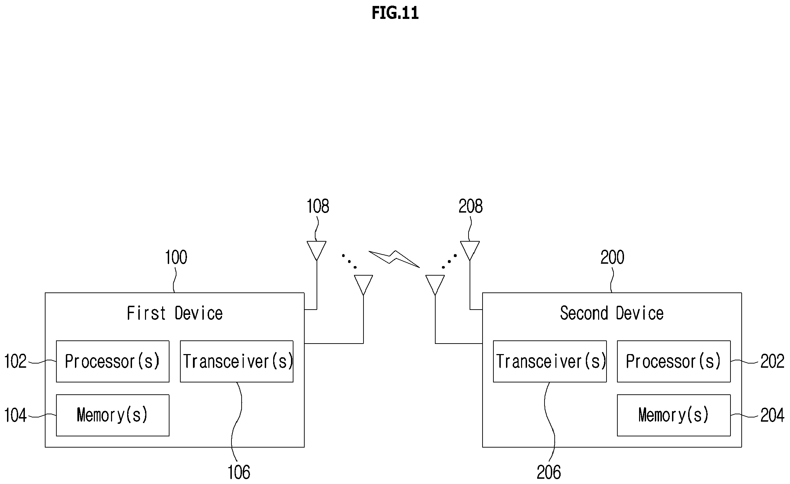

Here, the UE/network side is exemplary and may be applied to various devices as described with reference to FIG. 11. FIG. 10 is for convenience of description, and does not limit the scope of the present disclosure. In addition, some step(s) shown in FIG. 11 may be omitted depending on circumstances and/or settings. In addition, in the operation of the network side / UE of FIG. 11, the above-described uplink transmission/reception operation etc. may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may enter RRC_CONNECTED mode and report a message indicating one or more interested MBS services to the network (S105).

Here, the UE may transmit the message to the network through at least one of a UCI, MAC CE (Control Element), and RRC message. And, the MBS service of interest in the message may mean one of TMGI or G-RNTI listed in the DL message received from the network side.

For example, the DL message may be a service availability message listing TMGI #1, TMGI #3, TMGI #5, and TMGI #10. If the UE is interested in TMGI #5, the UE may indicate the order of TMGI #5 in the message. That is, the UE may report '3' to the network.

As another example, the DL message may be a service availability message listing G-RNTI #1, G-RNTI #3, G-RNTI #5, and G-RNTI #10. If the UE is interested in G-RNTI #10, the UE may indicate the order of G-RNTI #10 in the message. That is, the UE may report '4' to the network.

For example, the operation of the UE (100 or 200 in FIG. 13) in step S105 described above to transmit the message to the network side (200 or 100 in FIG. 13) may be implemented by the device in FIG. 13, which will be described below. For example, referring to FIG. 13, one or more processors 102 may control one or more transceivers 106 and/or one or more memories 104 to transmit the message, and one or more transceivers 106 may transmit the message to the network.

Upon receiving the message, the network side may transmit configuration information to the UE via an RRC message (S110).

For example, the configuration information may include search space configuration information including CFR (common frequency resource) configuration information, one or more group common PDSCH configurations information including TCI state for one or more G-RNTI values, and TCI status for one or more G-RNTI values.

Here, the RRC message may be a group common message transmitted through a PTM Multicast Control Channel (MCCH) or a UE-specific message transmitted through a UE-specific Dedicated Control Channel (DCCH).

And, CFR may include DL CFR and UL CFR. For example, one DL CFR may provide group common PDCCH and group common PDSCH transmission resources for MBS transmission and reception. One UL CFR may provide HARQ-ACK PUCCH resources for group common PDSCH reception. One CFR may be one MBS-specific BWP or one UE-specific BWP. Additionally or alternatively, one or multiple CFRs may be set within one UE-specific BWP. One CFR may have a connection relationship with one terminal-specific BWP.

The UE may be configured with at least a G-RNTI value for each MBS CFR or each serving cell. GC-CS-RNTI may be configured/used to activate(or enable), retransmit or release one or more group common SPS configurations.

If it is not configured with CFR for the UE or GC-CS-RNTI for the serving cell, and CS-RNTI is configured for the CFR or serving cell, the UE may use the CS-RNTI to activate, retransmit, or release one or more group common SPS configurations.

The network side may associate a TMGI list or a G-RNTI list with one GC-CS-RNTI value. At this time, the network side may provide a TMGI list or a G-RNTI list associated with the GC-CS-RNTI value.

Additionally, the configuration information (e.g., 'PDSCH-config') of each PDSCH may be configured as shown in Table 6 with the minimum information elements for multicast and/or broadcast.

[Table 6]

```
PDSCH-Config ::= SEQUENCE {
dataScramblingIdentityPDSCH INTEGER (0..1023) OPTIONAL, -- Need S
dmrs-DownlinkForPDSCH-MappingTypeA SetupRelease { DMRS-DownlinkConfig }
OPTIONAL, -- Need M
dmrs-DownlinkForPDSCH-MappingTypeB SetupRelease { DMRS-DownlinkConfig }
OPTIONAL, -- Need M
tci-StatesToAddModList SEQUENCE (SIZE(1..maxNrofTCI-States)) OF TCI-State
OPTIONAL, -- Need N
tci-StatesToReleaseList SEQUENCE (SIZE(1..maxNrofTCI-States)) OF TCI-StateId
OPTIONAL, -- Need N
vrb-ToPRB-Interleaver ENUMERATED {n2, n4} OPTIONAL, -- Need S
resourceAllocation ENUMERATED { resourceAllocationType0,
resourceAllocationType1, dynamicSwitch},
pdsch-TimeDomainAllocationList SetupRelease { PDSCH-
TimeDomainResourceAllocationList } OPTIONAL, -- Need M
pdsch-AggregationFactor ENUMERATED { n2, n4, n8 } OPTIONAL, -- Need S
rateMatchPatternToAddModList SEQUENCE (SIZE (1..maxNrofRateMatchPatterns))
OF RateMatchPattern OPTIONAL, -- Need N
rateMatchPatternToReleaseList SEQUENCE (SIZE (1..maxNrofRateMatchPatterns))
OF RateMatchPatternId OPTIONAL, -- Need N
rateMatchPatternGroup1 RateMatchPatternGroup OPTIONAL, -- Need R
rateMatchPatternGroup2 RateMatchPatternGroup OPTIONAL, -- Need R
rbg-Size ENUMERATED {config1, config2},
mcs-Table ENUMERATED {qam256, qam64LowSE} OPTIONAL, -- Need S
maxNrofCodeWordsScheduledByDCI ENUMERATED {n1, n2}
... }
```

For example, the operation of the UE (100 or 200 in FIG. 13) in step S110 described above receiving the configuration information from the network side (200 or 100 in FIG. 13) may be implemented by the device in FIG. 11, which will be described below. For example, referring to FIG. 11, one or more processors 102 may control one or more transceivers 106 and/or one or more memories 104 to receive the configuration information, and one or more transceivers 106 may receive the configuration information from a network side. The UE may receive control information from the network (S115). For example, the UE may receive downlink control information (DCI) for scheduling/activating/deactivating uplink/downlink from the network side.

Specifically, if a search space is configured for the configured CFR, the UE may receive CRC scrambled DCI with G-RNTI or G(group)-CS (configured scheduling)-RNTI by monitoring the PDCCH in the SS (search space) set in the configured CFR.

For example, the operation of the UE (100 or 200 in FIG. 13) in step S115 described above receiving the control information from the network side (200 or 100 in FIG. 13) may be implemented by the device in FIG. 13, which will be described below. For example, referring to FIG. 13, one or more processors 102 may control one or more transceivers 106 and/or one or more memories 104 to receive the control information, and one or more transceivers 106 may receive the control information from a network side.

The UE may receive TB from the network side (S120).

Specifically, if a data unit is available on the MTCH of the MBS radio bearer (MRB) for the MBS service, the network side may include a data unit for the SPS PDSCH occasion associated with the MTCH of the MRB for the MBS service, or associated with the TMGI of the MBS service, or associated with the short ID of the MBS service, or may construct the TB associated with the G-RNTI mapped to the MBS service according to the service-to-resource mapping and transmit it to the UE.

For group common dynamic scheduling of TB, the network side may transmit DCI to the UE through PDCCH. The DCI may be CRC scrambled by G-RNTI, G-CS-RNTI, or CS-RNTI. PDCCH may be implemented as a group common PDCCH or a UE-specific PDCCH.

For example, the DCI may include at least one of identifier for DCI format, carrier indicator, bandwidth part indicator, Frequency domain resource assignment, time domain resource allocation, VRB-to-PRB mapping, PRB bundling size indicator, rate matching indicator, ZP CSI-RS trigger, MCS, NDI, RV, HARQ process number, downlink allocation index, TPC command for scheduled PUCCH, PUCCH resource indicator, PDSCH-to-HARQ_feedback timing indicator, antenna port, transmission setup indication, SRS request, DMRS sequence initialization, priority indicator.

For group common dynamic scheduling, by group common or UE specific RRC message or by group common or UE specific MAC CE, the network side may provide the UE with one or more service-resource mappings for MBS services identified by TMGI or G-RNTI or GC-CS-RNTI. Data of the MBS service may be carried through the MBS radio bearer (MRB) of the multicast traffic logical channel, that is, the MTCH associated with the MBS service. The RRC message may be a group common message transmitted through a PTM Multicast Control Channel (MCCH) or a UE-specific message transmitted through a UE-specific Dedicated Control Channel (DCCH). The DCI scheduling PDSCH carrying MBS service data may also indicate one or more of a short ID, MTCH ID, MRB ID, G-RNTI value, and TMGI value for the MBS service.

When the UE receives the CRC scrambled DCI by the G-RNTI it wants to receive, the UE may determine the MBS service(s) associated with one or more of the short ID, MTCH ID, MRB ID, G-RNTI value, and TMGI value for each PDSCH occasion, based on the mapping between the MBS service indicated in the DCI and the HPN and/or the mapping between the MBS service indicated in the DCI and the short ID(s).

Then, if the UE is interested in the determined MBS service(s), the UE may receive the PDSCH transmission scheduled by the DCI. If the UE is not interested in the determined MBS service(s), the UE may not receive the PDSCH transmission scheduled by DCI.

For example, the operation of the UE (100 or 200 in FIG. 13) in step S120 described above to receive the TB from the network side (200 or 100 in FIG. 13) can be implemented by the device in FIG. 13, which will be described below. For example, referring to FIG. 13, one or more processors 102 may control one or more transceivers 106 and/or one or more memories 104 to receive the TB, and one or more transceivers 106 may receive the TB from a network side.

Upon receiving the group common DCI indicating the PUCCH resource for MBS HARQ-ACK, the UE may transmit HARQ-ACK through the PUCCH after receiving the PDSCH scheduled by the DCI (S125). That is, depending on the decoding state of PDSCH transmission, the UE may transmit HARQ feedback to the network.

For PTM scheme 1, the group common DCI may indicate a single PUCCH resource indicator and a single PDSCH-to-HARQ_feedback timing indicator at least for ACK/NACK-based HARQ-ACK.

Specifically, in the case of UE-specific PUCCH resource allocation for ACK/NACK-based HARQ-ACK for group common DCI, Other UEs in the group may be configured to a different value of at least 'PUCCH-Resource' and 'dl-DataToUL-ACK' in the UE-specific 'PUCCH-config' for multicast or unicast (unless 'PUCCH-config' for multicast is configured). Different PUCCH resources may be allocated to different UEs by the same PUCCH resource indicator and the same PDSCH-to-HARQ_feedback timing indicator of the group common DCI.

For PTP retransmission, in a UE-specific DCI, the PUCCH resource indicator and PDSCH-to-HARQ_feedback timing indicator may be interpreted based on 'PUCCH-config' for unicast regardless of whether 'PUCCH-config' for multicast is configured.

Here, PRI (PUCCH Resource Indicator) may be indicated by the group common DCI, as will be described later.

As an example, a UE-specific PRI list may be included in the DCI (Option 1A-1). Each PRI in that list may indicate an entry corresponding to the candidate 'pucch-ResourceId' value of 'PUCCH-config' for allocation of the same PUCCH resource or different PUCCH resources for different UEs in the group that received the same DCI. Different PRIs in the DCI can point to different entries in 'PUCCH-config'.

Here, the candidate 'pucch-ResourceId' value may be configured by RRC, and a different 'pucch-ResourceId' value may be configured for other UEs of the same group at least in multicast 'PUCCH-config'.

As another example, a group common PRI may be included in the DCI (Option 1A-2). A single group common PRI may indicate a specific entry for a candidate 'pucch-ResourceId' value in the UE-specific 'PUCCH-config' for allocation of the same or different PUCCH resources for all UEs in the group.

And, the candidate 'pucch-ResourceId' value may be configured by RRC. At least in 'PUCCH-config' for multicast, different 'pucch-ResourceId' values may be configured for different UEs in the same group.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

K1 (PDSCH-to-HARQ_feedback timing indicator) may be indicated by the group common DCI, as will be described later.

As an example, a list of UE-specific K1 values may be included in the DCI (Option 1B-1). Each K1 in the list may indicate the same UL slot or a different UL (sub)slot for other terminals in the group.

For example, different K1 values are assigned to different UEs. That is, a K1 value may be assigned to UE 1, a K2 value may be assigned to UE 2, and a K3 value may be assigned to UE 3.

As another example, the K1 value may be shared by multiple UEs. For example, UE 1 and UE 2 may share the K1 value, and UE 3 and UE 4 may share the K2 value.

As another example, one K1 value may be a reference, and another K1 value may be assigned based on that reference. {List of K1_ref, K1_offset} may be indicated in DCI.

For example, UE 1 may use K1_ref, UE 2 may use K1_ref + K1_offest1, and UE 3 may use K1_ref + K1_offest2.

As another example, a group common K1 value may be included in the DCI (Option 1B-2). For example, a single K1 value may be the same for all UEs in a group receiving DCI, or may indicate a corresponding entry for the candidate 'dl-DataToUL-ACK' value in the UE-specific 'PUCCH-config' for different PUCCH resource allocation. This can be applied when the DCI format is configured in the UE-specific 'PUCCH-config' for the K1 value.

As another example, the candidate 'dl-DataToUL-ACK' value is configured by RRC and may be configured differently for other UEs of the same group at least in 'PUCCH-config' for multicast.

As another example, if 'PUCCH-config' for multicast is configured for HARQ-ACK for grouping common PDSCH scheduled by group common DCI, the UE may assume that the K1 value of the group common DCI indicates the corresponding entry for the candidate 'dl-DataToUL-ACK' value in 'PUCCH-config' for multicast.

As another example, if 'PUCCH-config' for multicast is not configured for HARQ-ACK to group common PDSCH scheduled by group common DCI, the UE may assume that the K1 value of the group common DCI indicates an entry corresponding to the candidate 'dl-DataToUL-ACK' value in 'PUCCH-config' for unicast.

In addition, upon receiving the group common DCI CRC scrambled by the G-RNTI and/or the terminal-specific DCI CRC scrambled by the C-RNTI, if Type-1 HARQ-ACK codebook is configured for 'PUCCH-config' for multicast and/or 'PUCCH-config' for unicast, the UE may configure TDRA (Time Domain Resource Allocation) to generate a type-1 HARQ-ACK codebook for HARQ-ACK(s) to group common PDSCH scheduled by group common DCI and/or UE-specific PDSCH scheduled by UE-specific DCI.

If TB decoding is not successful in the PDSCH transmission occasion, the UE may transmit HARQ NACK to the base station through PUCCH resources in the configured UL CFR.

By using PUCCH resources, the UE may transmit HARQ-ACK to other PDSCH transmissions, such as unicast SPS PDSCH, dynamic unicast PDSCH, PTP retransmission, and/or dynamic group common PDSCH.

Here, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the above-described options.

If the RSRP threshold is configured, the UE may use NACK-only based HARQ-ACK based NACK based on the RSRP of the measured serving cell. If the measured RSRP is higher than the threshold, NACK-only-based HARQ-ACK may be transmitted through the group common PUCCH resource indicated by the DCI's PRI. If the measured RSRP is lower than the threshold, NACK-only-based HARQ-ACK can be changed to ACK/NACK-based HARQ-ACK on the UE-specific PUCCH resource indicated by the PRI of the DCI.

Meanwhile, when 'pdsch-AggregationFactor' is configured for G-RNTI or 'repeat_number' is indicated by DCI from the network side, TB scheduled by group common DCI, if configured, may be repeated for the Nth HARQ transmission of the TB within each symbol allocation between each 'pdsch-AggregationFactor' consecutive slot or between each 'repeat_number' consecutive slot.

For example, the operation of the UE (100 or 200 in FIG. 13) in step S125 described above to transmit the HARQ-ACK from the network side (200 or 100 in FIG. 13) may be implemented by the device in FIG. 13, which will be described below. For example, referring to FIG. 13, one or more processors 102 may control one or more transceivers 106 and/or one or more memories 104 to transmit the HARQ-ACK, and one or more transceivers 106 may transmit the HARQ-ACK from a network side.

The network side that has received the HARQ NACK in the TCI state may retransmit the PDCCH and PDSCH using the TCI state in the DL CFR configured for retransmission of the TB (S130).

The UE may monitor the group common and/or UE-specific PDCCH using the TCI state for the search space configured in the DL CFR to receive retransmission of the TB. The network side may retransmit the TB to one of the UEs in the group by UE-specific PDCCH. However, since the other UE successfully received the TB, it may not receive the TB retransmission.

When the UE receives the PDCCH for retransmission of the TB, the UE may receive the PDSCH scheduled by the DCI of the PDCCH. If the UE successfully decodes TB from PDSCH, the UE may consider the decoded TB to be associated with short ID for MTCH, MRB, TMGI, G-RNTI and/or MBS services based on the mapping between the MBS service indicated by the DCI and the HPN (HARQ process number), and/or the mapping between the MBS service indicated by the DCI and the short ID(s).

If TB decoding is successful at the PDSCH transmission occasion, the UE may transmit HARQ ACK to the network through PUCCH resources in the UL CFR configured according to the above-described procedure. Using the PUCCH resource, the UE may transmit HARQ-ACK to other PDSCH transmissions, such as unicast SPS PDSCH, dynamic unicast PDSCH, PTP retransmission, and/or dynamic group common PDSCH.

In this case, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the options/embodiments described above.

For example, the operation of the UE (100 or 200 in FIG. 13) in step S130 described above receiving a TB retransmission from the network side (200 or 100 in FIG. 13) may be implemented by the device in *FIG. 13*, which will be described below. For example, referring to FIG. 13, one or more processors 102 may control one or more transceivers 106 and/or one or more memories 104, etc. to receive the TB retransmission, and one or more transceivers 106 may receive the TB retransmission from a network side.

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g.,

a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to perform communication in a wireless communication system, the method comprising:

   receiving, from a base station, configuration information related to at least one secondary cell (SCell);
   receiving, from the base station, first information for activating a specific SCell among the at least one SCell; and
   based on first data being received from the base station on the specific SCell, starting or restarting a SCell deactivation timer associated with the specific SCell,
   wherein the first data includes at least one of multicast data or unicast data and does not include broadcast data.

2. The method of claim 1, wherein:
   the broadcast data does not include downlink control information (DCI) cyclic redundancy check (CRC) scrambled by a group-radio network temporary identifier (G-RNTI) or group-configured scheduling(G-CS)-RNTI indicating downlink (DL) assignment for broadcast.

3. The method of claim 1, wherein:
   the multicast data includes DCI CRC scrambled by a G-RNTI or G-CS-RNTI indicating downlink assignment for multicast.

4. The method of claim 1, wherein:
   the multicast data includes a group common physical downlink shared channel (PDSCH) scheduled by DCI.

**5.** The method of claim 1, wherein:
the multicast data includes point-to-point (PTP) retransmission data associated with a G-RNTI or G-CS-RNTI scheduled by DCI.

**6.** The method of claim 1, wherein:
the multicast data includes a group common semi-persistent (SPS) PDSCH.

**7.** The method of claim 1, wherein:
based on second data including broadcast data being received within a transmission window, the SCell deactivation timer starts or restarts after the transmission window ends.

**8.** The method of claim 7, wherein:
the transmission window includes at least one physical downlink control channel (PDCCH) monitoring occasion for same G-RNTI.

**9.** The method of claim 1, wherein:
based on the SCell deactivation timer expiring, a common frequency resource (CFR) associated with the specific SCell is deactivated.

**10.** The method of claim 1, wherein:
based on the SCell inactivation timer expiring, an inactivity timer of a CFR associated with the specific SCell is stopped.

**11.** The method of claim 1, wherein:
based on the SCell deactivation timer expiring, a group common SPS resource based on a CFR associated with the specific SCell are released or deactivated.

**12.** A user equipment (UE) performing uplink transmission in a wireless communication system, the UE comprising:

at least one transceiver; and
at least one processor coupled to the at least one transceiver;
wherein the at least one processor is configured to:

receive, from a base station through the at least one transceiver, configuration information related to at least one secondary cell (SCell);
receive, from the base station through the at least one transceiver, first information for activating a specific SCell among the at least one SCell; and
based on first data being received from the base station on the specific SCell, start or restart a SCell deactivation timer associated with the specific SCell,
wherein the first data includes at least one of multicast data or unicast data and does not include broadcast data.

**13.** A method of performing communication by a base station in a wireless communication system, the method comprising:

transmitting, to a user equipment (UE), configuration information related to at least one secondary cell (SCell); and
transmitting, to the UE, first information for activating a specific SCell among the at least one SCell;
wherein based on first data being transmitted to the UE on the specific SCell, a SCell deactivation timer associated with the specific SCell is started or restarted, and
wherein the first data includes at least one of multicast data or unicast data and does not include broadcast data.

**14.** A base station performing uplink reception in a wireless communication system, the base station comprising:

at least one transceiver; and
at least one processor coupled to the at least one transceiver;
wherein the at least one processor is configured to:

transmit, to a user equipment (UE) through the at least one transceiver, configuration information related to at least one secondary cell (SCell); and

transmit, to the UE through the at least one transceiver, first information for activating a specific SCell among the at least one SCell;

wherein based on first data being transmitted to the UE on the specific SCell, a SCell deactivation timer associated with the specific SCell is started or restarted, and

wherein the first data includes at least one of multicast data or unicast data and does not include broadcast data.

15. A processing device configured to control a user equipment (UE) to perform communication in a wireless communication system, the processing device comprising:

at least one processor; and

at least one computer memory operatively coupled to the at least one processor and storing instructions for performing operations upon being executed by the at least one processor,

wherein the operations comprise:

receiving, from a base station, configuration information related to at least one secondary cell (SCell);

receiving, from the base station, first information for activating a specific SCell among the at least one SCell; and

based on first data being received from the base station on the specific SCell, starting or restarting an SCell deactivation timer associated with the specific SCell,

wherein the first data includes at least one of multicast data or unicast data and does not include broadcast data.

16. At least one non-transitory computer readable medium storing at least one instruction, wherein:

the at least one instruction executed by at least one processor controls a device which performs communication in a wireless communication system to perform:

receiving, from a base station, configuration information related to at least one secondary cell (SCell);

receiving, from the base station, first information for activating a specific SCell among the at least one SCell; and

based on first data being received from the base station on the specific SCell, starting or restarting an SCell deactivation timer associated with the specific SCell,

wherein the first data includes at least one of multicast data or unicast data and does not include broadcast data.

# FIG.1

# FIG.2

**FIG.3**

**FIG.4**

**FIG.5**

# FIG.6

INITIAL CELL SEARCH

SYSTEM INFORMATION RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S601  S602  S603  S604  S605  S606  S607  S608

· DL/UL ACK/NACK
· UE CQI/PMI RI REPORT
  USING PUSCH AND PUCCH

**FIG.7**

G-RNTI DCI

| Group Common PDSCH |

HARQ-ACK

G-RNTI DCI

| Group Common PDSCH |

HARQ-ACK

**FIG.8**

RECEIVING CONFIGURATION INFORMATION RELATED TO AT LEAST ONE SCELL FROM THE BASE STATION — S810

RECEIVING FIRST INFORMATION FOR ACTIVATING A SPECIFIC SCELL AMONG AT LEAST ONE SCELL FROM THE BASE STATION — S820

BASED ON THE FIRST DATA BEING RECEIVED FROM THE BASE STATION ON A SPECIFIC SCELL, STARTING OR RESTARTING THE SCELL DEACTIVATION TIMER ASSOCIATED WITH THE SPECIFIC SCELL — S830

**FIG.9**

```
┌─────────────────────────────────────┐
│   TRANSMITTING CONFIGURATION         │
│ INFORMATION RELATED TO AT LEAST ONE  │ ⌇ S910
│          SCELL TO TH UE              │
└─────────────────────────────────────┘
                    │
                    ▼
┌─────────────────────────────────────┐
│  TRANSMITTING FIRST INFORMATION FOR  │
│ ACTIVATING A SPECIFIC SCELL AMONG AT │ ⌇ S920
│        LEAST ONE SCELL TO THE UE     │
└─────────────────────────────────────┘
```

**FIG.10**

Network side                                                    UE

MBS SERVICE RELATED MESSAGE (S105)

CONFIGURATION INFORMATION (S110)

CONTROL INFORMATION (S115)

TB (S120)

HARQ-ACK (S125)

TB RETRANSMISSION (S130)

EP 4 432 745 A1

**FIG.11**

| INTERNATIONAL SEARCH REPORT | International application No. |
| --- | --- |
| | **PCT/KR2022/017727** |

**A. CLASSIFICATION OF SUBJECT MATTER**

**H04W 72/00**(2009.01)i; **H04W 72/04**(2009.01)i; **H04W 72/12**(2009.01)i; **H04W 76/27**(2018.01)i

According to International Patent Classification (IPC) or to both national classification and IPC

**B. FIELDS SEARCHED**

Minimum documentation searched (classification system followed by classification symbols)

H04W 72/00(2009.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SCell, activation, CFR, DCI, inactivity timer, multicast, broadcast, GC-PDSCH, PDCCH, GC SPS resource

**C. DOCUMENTS CONSIDERED TO BE RELEVANT**

| Category* | Citation of document, with indication, where appropriate, of the relevant passages | Relevant to claim No. |
| --- | --- | --- |
| Y | NOKIA et al. Group Scheduling Mechanisms to Support 5G Multicast / Broadcast Services for RRC_CONNECTED UEs. R1-2111135, 3GPP TSG RAN WG1 Meeting #107-e, e-Meeting. 05 November 2021.<br>See sections 2-3. | 1-16 |
| Y | US 2020-0322116 A1 (OFINNO, LLC) 08 October 2020 (2020-10-08)<br>See paragraphs [0215] and [0273]; and claim 1. | 1-16 |
| A | ZTE. Discussion on mechanisms to Support Group Scheduling for RRC_CONNECTED UEs. R1-2108851, 3GPP TSG RAN WG1 #106b-e, e-Meeting. 30 September 2021.<br>See sections 2-5. | 1-16 |
| A | ZTE et al. Group scheduling and power saving of NR MBS. R2-2107337, 3GPP TSG-RAN WG2 Meeting #115 electronic. [Online]. 06 August 2021.<br>See sections 2-4. | 1-16 |
| A | TD TECH et al. Group scheduling related questions for RRC_CONNECTED UEs. R1-2109767, 3GPP TSG RAN WG1 Meeting#106bis-e, e-Meeting. 30 September 2021.<br>See sections 2-3. | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 February 2023** | **20 February 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/017727**

| Patent document cited in search report | | | Publication date (day/month/year) | Patent family member(s) | | | Publication date (day/month/year) |
|---|---|---|---|---|---|---|---|
| US | 2020-0322116 | A1 | 08 October 2020 | US | 10693620 | B2 | 23 June 2020 |
| | | | | US | 2019-0132110 | A1 | 02 May 2019 |

Form PCT/ISA/210 (patent family annex) (July 2022)